# EUROPÄISCHE PATENTSCHRIFT

(11) **EP 1 747 707 B1**
(45) Veröffentlichungstag und Bekanntmachung des Hinweises auf die Patenterteilung: **07.01.2009**
(21) Anmeldenummer: 06405299.6
(22) Anmeldetag: 12.07.2006
(51) Int. Cl.: A01B 9/00

(54) **Bodenbearbeitungsgerät (Rotorzylinder-Pflug) für das Wenden von Erdreich**
Soil working apparatus (rotary plough) for turning over the earth
Appareil de travail du sol (charrue rotative) pour retourner la terre

(30) Priorität: 26.07.2005 CH 12422005
(43) Veröffentlichungstag der Anmeldung: 31.01.2007
(73) Patentinhaber: AMTEC Design & Konstruktion, 8156 Oberhasli (CH)
(72) Erfinder: Amsler, Martin, 8156 Oberhasli (CH)

(56) Entgegenhaltungen:
- DD-A- 33 270
- DE-A1- 3 817 498
- DE-C- 207 898
- FR-A- 976 132
- GB-A- 2 060 334

## Beschreibung

Die Erfindung betrifft ein Bodenbearbeitungsgerät für das Pflügen von Erdreich gemäss Anspruch 1, welches die Erde nicht wie üblich mit einer schraubenformähnlichen statischen Pflugschar wendet, sondern, durch das bekannte Prinzip, wie in der Offenlegungsschrift "DE3817498A1" beschrieben, durch einen, oder mehrere Hohlzylinder, oder Kegelstumpftrommeln (1), (sogenannte "Arbeitswerkzeuge") wobei die Erdaufnahme an der in die Zugrichtung schauenden Öffnung der Arbeitswerkzeuge (1) erfolgt. Als Neuheit wirkt der Umstand, dass im Gegensatz zum bekannten Prinzip, der Antrieb der Arbeitswerkzeuge nicht über einen Fremdantrieb erfolgt, sondern alleine durch die vom Zugfahrzeug erzeugte Zugbewegung, zusammen mit der horizontalen und vertikalen Anstellposition der Arbeitswerkzeuge, wobei der Verschleissring (8), durch seine spezielle Ausgestaltung nicht nur eine zuverlässige Antriebswirkung erzeugt und die Arbeitswerkzeuge in Rotation versetzt, sondern auch gleichzeitig die Erde schneidet und absticht. Des weiteren wird das Wenden des Erdreiches nicht durch mitrotierende, bis ins Zentrum des Arbeitswerkzeuges reichende, sogenannte Pflugscharblätter im Inneren der Arbeitswerkzeuge herbeigeführt, welche als Wende- und Auswurfskörper wirken, sondern allein von dem, durch den von der Schrägzuglage der Arbeitswerkzeuge erwirkten Anpressdruck des Erdreiches auf die Innenwand der Arbeitswerkzeuge, zusammen mit der Linearbewegung des Erdreiches und der Rotation der Arbeitswerkzeuge, welche das Erdreich eine schraubenformähnliche Bewegung machen lassen und somit gewendet wird. Es entsteht dabei, nicht wie beim bekannten Prinzip mit Pflugscharblättern im Innern der Arbeitswerkzeuge, ein unterbrochener, sondern ein gleichförmig fliessender Erdstrom und somit eine gleichförmige, ebene und gleichmässig durchmischte Erdablage. Dadurch, dass sich keine Pflugscharblätter oder dergleichen im Innern der Arbeitswerkzeuge befinden, ist auch die Verstopfungsgefahr minimiert. Zudem ist durch den Umstand, dass auf einen Fremdantrieb verzichtet werden kann und dadurch, dass die Arbeitswerkzeuge eine horizontale, sowie eine vertikale Anstellposition bezüglich der Zugachse aufweisen, und somit eine geringe Reibungsfläche an der Furchensohle und -Flanke haben, der totale Energieaufwand für das Wenden des Erdreiches wesentlich geringer, als bei dem schon bekannten Prinzip. Auch wird durch die horizontale Anstellposition der Arbeitswerkzeuge ein schnelles und sicheres Einziehen der Arbeitswerkzeuge auf die vorgesehene Arbeitstiefe erreicht.

Zusammengefasst, besteht die Neuheit darin, dass, obwohl das Grundprinzip bekannt ist, die Kombination aller fiir das Wenden des Erdreiches notwendigen Funktionen in jeweils einem einzigen Arbeitswerkzeug mit seiner einzigartigen Arbeitsposition vereinigt sind und dessen Antrieb allein durch die ohnehin auszuführende Zugbewegung erfolgt, wobei die einfache Bauweise ein störungsfreies Arbeiten ermöglicht und deren Praxistauglichkeit unterstreicht.

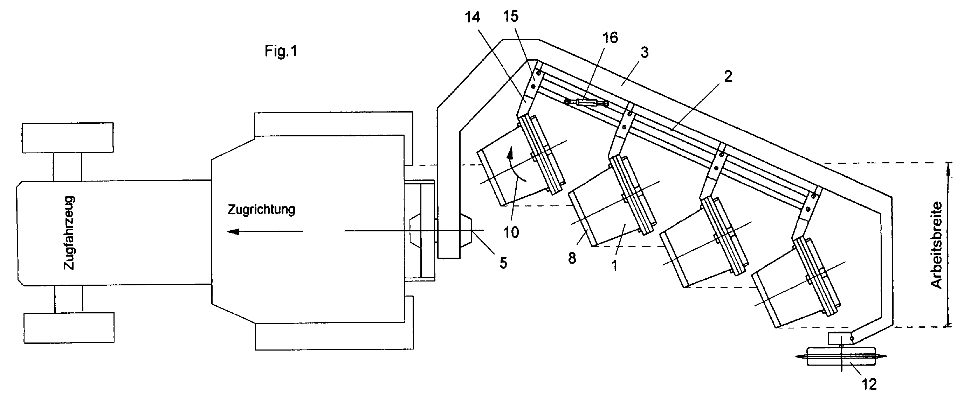

Fig.1 Ansicht eines Rotorzylinder-Pfluges von oben, mit 4 Arbeitswerkzeugen mit Ringlagerung.

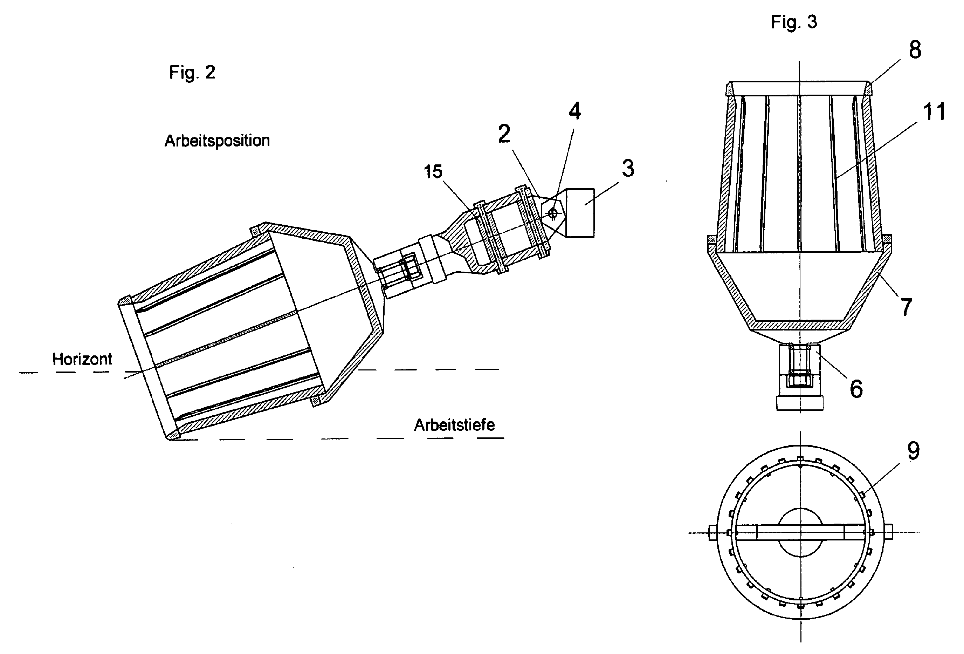

Fig.2 Schnittzeichnungen eines Arbeitswerkzeuges mit zentrischem Kegelrollenlager und Zweierspeiche in Arbeitsposition.
Fig.3 Schnittzeichnungen und Ansicht von vorne eines Arbeitswerkzeuges mit zentrischem Kegelrollenlager und Zweierspeiche.

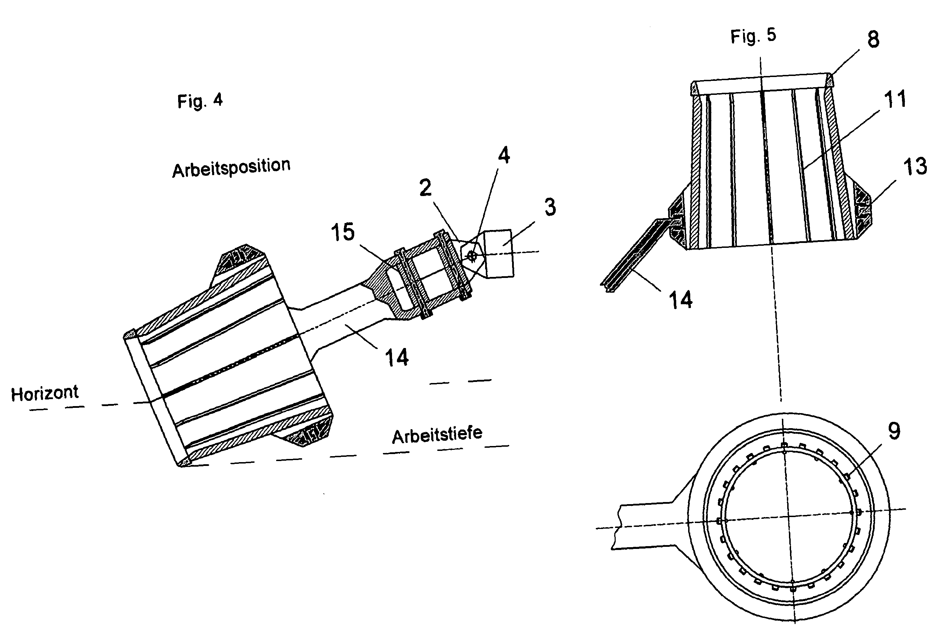

Fig.4 Schnittzeichnungen eines Arbeitswerkzeuges mit Ringlagerung und Einarm-Halterung in Arbeitsposition.
Fig.5 Schnittzeichnungen und Ansicht von vorne eines Arbeitswerkzeuges mit Ringlagerung und Einarm-Halterung.

### Beschreibung:

Die Arbeitswerkzeuge (1) sind an einem Halteholm (2) befestigt. Der Halteholm ist mit einem Pendelgelenk (4) mit dem drehbaren Hauptzugholm (3) verbunden. Das Pendelgelenk bringt und fixiert den Halteholm mit den Arbeitswerkzeugen, je nach Zugrichtung, in die jeweilige horizontale Anstellposition. Der Hauptzugholm (3) hat seinen Drehpunkt (5) mittig zum Zugfahrzeug.

Die vorgesehene Schnittbreite ergibt die Baugrösse der Arbeitswerkzeuge (1), da die Erdaufnahmebreite nur über ca. 4/5 des in Fahrtrichtung schauenden Durchmessers, erfolgen darf.

In einer Baugrösse ist jedoch, wie bei handelsüblichen Pflügen, eine gewisse Bandbreite in der Bearbeitungstiefe möglich. Die Bearbeitungstiefe kann bis maximal der Hälfte des vorderen Arbeitswerkzeugdurchmessers betragen.

Die Arbeitswerkzeuge (1) sind so befestigt und gelagert, dass sie sich um ihre Mittelachse drehen können. Dies geschieht entweder mittels eines zentrischen Kegelrollenlagers (6), oder eines Ringlagers (13).

Die Abstützung und Lagerung darf den Austritt der Erde am hinteren Ende nicht entscheidend behindern. Sinnvoll ist beim zentrischen Kegelrollenlager eine Einer-, oder maximal eine Zweier-Speiche (7) und beim Prinzip des Ringlagers ist eine Einarm-Halterung (14) ideal.

Die Arbeitswerkzeuge (1) haben auf der Vorderseite einen Verschleissring (8). Auf der Aussenumfangseite des Verschleissringes (8) sind Mitnehmerleisten (9) angebracht, um die Rotation (10) der Arbeitswerkzeuge (1), infolge deren Schrägzuglage und der Zugbewegung, sicher in Gang zu setzen.

Die ideale Länge der Arbeitswerkzeuge (1) ist im Verhältnis zum Durchmesser in etwa 1:1.

Die Arbeitswerkzeuge (1) haben einen horizontalen Anstellwinkel, sodass sie sich sicher in die Erde einziehen und auf der vorgesehenen Bearbeitungstiefe ein sicheres, ruhiges Arbeiten garantieren.

Die seitliche Schrägzuglage der Arbeitswerkzeuge (1) ist so einzustellen, dass die daraus resultierende Drehbewegung (10) der Arbeitswerkzeuge (1), im Verhältnis zum Zugweg, ein vollständiges Wenden des Erdreiches zur Folge hat und der Seitenzug zugleich minimal ist.

Die Seitenzug- Feinjustierung, sowie die Tiefeneinstellung erfolgt durch ein separates Führungs-Stützrad (12).

Baugrössen mit mehreren Arbeitswerkzeugen (1) haben sinnvollerweise mindestens an einem der Arbeitswerkzeuge eine nahe am Arbeitswerkzeug (1), auf der Bearbeitungstiefe laufende Seiten- und Tiefenführung.

Für das Arbeiten in der Gegenrichtung wird der Haupt-Zugholm (3), mitsamt dem Halteholm (2) und den Arbeitswerkzeugen (1), am Drehpunkt (5) um 180° in seiner Längsachse gedreht, wobei der horizontale Anstellwinkel mittels des Halteholmes (2) wieder in die richtige Position für diese Zugrichtung gebracht und mit einer geeigneten Feststellvorrichtung fixiert wird.

Dies hat den wesentlichen Vorteil, dass in beiden Zugrichtungen mit den selben Arbeitswerkzeugen (1) gearbeitet werden kann, obwohl sie die Funktionen, Erde abstechen, aufnehmen, transportieren, wenden und an der richtigen Stelle wieder ablegen, in sich vereinigen.

Die Rotation (10) der Arbeitswerkzeuge (1) übt einen positiven Krümel- und Durchmischungseffekt auf das gewendete Erdreich aus.

Dadurch wird die Durchmischung der Erde mit allfälligen Ernterückständen gefördert, was einen positiven Effekt auf die Verrottung derselben zur Folge hat.

Unter Umständen kann, durch die bessere Krümelung der Erde, bei der nachfolgenden Saatbettvorbereitung ein Arbeitsdurchgang eingespart werden.

Zudem wird, durch die Rotation (10) der Arbeitswerkzeuge (1), der Zugkraftbedarf gesenkt, und somit die Effizienz des Energieverbrauchs erhöht.

Durch den Umstand, dass immer nur ein Teilbereich der Arbeitswerkzeuge (1) in Berührung mit dem Erdreich ist, erhitzen sich diese nur in geringem Masse. Somit kann mit grösstmöglicher Fahrgeschwindigkeit gearbeitet werden. Dies hat eine Optimierung der Flächenleistung zur Folge.

Der ganze Rotorzylinder-Pflug kann wesentlich einfacher, günstiger, kompakter und leichter als heutige Pflüge, gebaut werden.

## Patentansprüche

1. Bodenbearbeitungsgerät für das Wenden von Erdreich nach dem bekannten Prinzip einer sich drehenden Trommel, wobei bei der Bodenbearbeitung das Erdreich mittels mindestens einem als rotierende Trommel ausgebildeten Arbeitswerkzeug (1) abstechbar, aufnehmbar, transportierbar, wendbar und beim Verlassen des Arbeitswerkzeuges (1), entgegengesetzt der Zugrichtung, ablegbar ist, **dadurch gekennzeichnet, dass** die Rotation (10) des Arbeitswerkzeuges (1) alleine durch die vom Zugfahrzeug erzeugte Zugbewegung und durch die horizontale und die vertikale Anstellposition der Mittelachse des Arbeitswerkzeuges (1) bezüglich der Zugachse und der besonderen Ausgestaltung des sich auf der in die Zugrichtung schauenden Seite des Arbeitswerkzeuges (1) angebrachten Verschleissringes (8) mit seinen Mitnehmerleisten (9) oder dergleichen, erzeugbar ist und dass das Wenden des Erdreiches durch die Innenwand des Arbeitswerkzeuges (1), welche, durch die Zugbewegung, zusammen mit der Rotation (10), in Bezug zum Erdreich, eine Schraubenform beschreibt und das Erdreich, durch den Anpressdruck, dieser Schraubenform so lange folgt, bis es um 180° gewendet ist, die Innenwand dann entgegen der Zugrichtung verlässt und durch die Schwerkraft abgelegt wird, wobei sich das Arbeitswerkzeug (1) durch seine, bezüglich der Horizontalen, geneigten Anstellposition selbst in die Erde einzieht und durch die bezüglich der Zugachse, vertikalen Anstellposition des Arbeitswerkzeuges (1), ein versetztes Ablegen des abgestochenen, aufgenommenen, transportierten und gewendeten Erdreiches erreicht wird und **dadurch** eine geräumte Pflugfurche, fiir das Arbeiten des Zugfahrzeuges im nächsten Arbeitsgang hinterlässt, wobei für die entgegengesetzte Zugrichtung mit dem selben Arbeitswerkzeug (1) gearbeitet wird, wofür sich nur dessen Anstellposition, sowie dessen Rotationssinn gegensätzlich ändern.

2. Bodenbearbeitungsgerät nach Anspruch 1, **dadurch gekennzeichnet, dass** die Lagerung des mindestens einen Arbeitswerkzeuges durch ein zentrisches Kegelrollenlager (9) erfolgt.

3. Bodenbearbeitungsgerät nach Anspruch 12, **dadurch gekennzeichnet, dass** die Verbindung des zentrischen Kegelrollenlagers (9) mit dem mindestens einen Arbeitswerkzeug (1) durch mindestens eine Speiche (7) erfolgt.

4. Bodenbearbeitungsgerät nach Anspruch 15, **dadurch gekennzeichnet, dass,** für die jeweilige Arbeitsrichtung, der Halteholm (2) auf seiner Längsachse schwenkbar ausgeführt ist und dass seine beiden Endlagen verstellbar und mit einer Vorrichtung fixierbar sind, damit die Anstellposition der Mittelachse des mindestens einen Arbeitswerkzeuges (1) einstellbar ist.

5. Bodenbearbeitungsgerät nach Anspruch 16, **dadurch gekennzeichnet, dass** der Halteholm (2) als Parallelogramm (15) ausgebildet ist und eine Einstellvorrichtung (16) zum Einstellen des seitlichen Einzugwinkels der Arbeitswerkzeuge (1) aufweist.

6. Bodenbearbeitungsgerät nach Anspruch 17, **dadurch gekennzeichnet, dass** bei der Bodenbearbeitung mit dem Einstellen des seitlichen Einzugwinkels, der Seitenzug des Bodenbearbeitungsgerätes und die Drehgeschwindigkeit des mindestens einen Arbeitswerkzeuges (1) einstellbar ist.

7. Bodenbearbeitungsgerät nach Anspruch 16, **dadurch gekennzeichnet, dass** der Halteholm (2) an einem Hauptzugholm (3) aufgehängt ist.

8. Bodenbearbeitungsgerät nach Anspruch 19, **dadurch gekennzeichnet, dass** der Hauptzugholm (3), mittig zum anzukuppelnden Zugfahrzeug, einen Drehpunkt (5) aufweist.

9. Bodenbearbeitungsgerät nach Anspruch 20, **dadurch gekennzeichnet, dass** der Hauptzugholm (3) an der Hebevorrichtung des anzukuppelnden Zugfahrzeuges fixierbar ist.

10. Bodenbearbeitungsgerät nach Anspruch 21, **dadurch gekennzeichnet, dass** bei der Bodenbearbeitung, beim Wechseln der Arbeitsrichtung, der Hauptzugholm (3) durch die Hebevorrichtung des anzukuppelnden Zugfahrzeuges vollständig anhebbar ist und an seinem Drehpunkt (5) in der Längsachse um 180° drehbar ist.

11. Bodenbearbeitungsgerät nach den Ansprüchen 16, 17 und 19, **dadurch gekennzeichnet, dass** der Haltehohn (2) nach dem Drehen des Hauptzugholmes (3) in diejenige Endlage schwenkbar und fixierbar ist, sodass das mindestens eine Arbeitswerkzeug (1) wieder die richtige Anstellposition einnimmt.

12. Bodenbearbeitungsgerät nach Anspruch 19, **dadurch gekennzeichnet, dass** der Hauptzugholm (3), eine Querschiebe-Vorrichtung, aufweist, um ihn an die Spurbreite des anzukuppelnden Zugfahrzeuges anzupassen.

13. Bodenbearbeitungsgerät nach Anspruch 19, **dadurch gekennzeichnet, dass** bei der Bodenbearbeitung die Arbeitstiefenbegrenzung des mindestens einen Arbeitswerkzeuges(1) durch ein am Hauptzugholm (3) fixiertes Stützrad (12) erfolgt.

14. Bodenbearbeitungsgerät nach Anspruch 25, **dadurch gekennzeichnet, dass** das Stützrad (12) radial zur Lauffläche im ganzen Umfang eine Schneide aufweist, welche der Seitenzugstabilisierung dient.

15. Bodenbearbeitungsgerät nach Anspruch 26, **dadurch gekennzeichnet, dass** die Seitenzugstabilisierung an der Stütze des Stützrades (12) einstellbar und justierbar ist.

## Claims

1. A soil cultivation machine for turning over soil according to the known principle of a rotating drum, whereby, in the course of the soil cultivation, the earth is cut and picked up by at least one working tool (1) designed as a rotating drum, is transported, turned over and, on leaving the working tool (1), deposited opposite to the traction direction, **characterized in that** the rotation (10) of the working tool (1) is achieved solely by, on the one hand, the traction movement produced by the traction vehicle and, on the other, by the horizontal and vertical angle settings of the center shaft of the working tool (1) in relation to the traction shaft and by the special design of the wear ring (8), with its driving ridges (9) or similar, fitted on the forward looking side of the working tool (1), and **in that** the turning over of the soil is effected by the inner wall of the working tool (1), which due to the traction movement together with the rotation (10) describes a helicoidal movement in relation to the soil and, as a result of the contact pressure, the soil follows this helicoid until it has been turned over by 180°, then leaves the inner wall in opposite direction to the traction movement and is deposited due to gravity, whereby the working tool (1), due to its horizontally angled position, pulls itself into the earth and whereby, due to the vertical angle setting in relation to the traction shaft of the working tool (1), the soil that has been cut, taken up, transported and turned over is deposited in an offset line thereby leaving a cleared plough furrow to be cultivated by the traction vehicle in the next working cycle, with the same working tool (1) being used for operating in the reverse traction direction for which purpose only the angle settings and the sense of rotation of the working tool are reversed.

2. A soil cultivation machine according to claim 1 **characterized in that** the mounting of the minimum of one working tool is provided by a centric conical roller bearing (6).

3. A soil cultivation machine according to claim 12 **characterized in that** the centric conical roller bearing (6) is connected to the minimum of one working tool (1) by at least one spoke (7).

4. A soil cultivation machine according to claim 15 **characterized in that** for the two operating directions the support arm (2) is pivoted on its longitudinal axis and that its two end positions can be flexibly fixed by a device to facilitate an adjustment of the angled setting of the center shaft of the minimum of one working tool (1).

5. A soil cultivation machine according to claim 16 **characterized in that** the support arm (2) is designed as a parallelogram (15) and features an adjustment device (16) for adjusting the lateral draw-in angle of the working tool (1).

6. A soil cultivation machine according to claim 17 **characterized in that,** in the course of working the soil, the lateral pull of the soil cultivation machine and the rotating speed of the minimum of one working tool (1) are adjustable by an adjustment of the lateral draw-in angle.

7. A soil cultivation machine according to claim 16 **characterized in that** the support arm (2) is suspended from a main traction arm (3).

8. A soil cultivation machine according to claim 19 **characterized in that** the main traction arm (3), features a pivotal point (5, that is concentric to the traction vehicle to be coupled up.

9. A soil cultivation machine according to claim 20 **characterized in that** the main traction arm (3) can be fixed to the lifting gear of the traction vehicle to be coupled up.

10. A soil cultivation machine according to claim 21 **characterized in that**, in the course of working the soil, when the operating direction is reversed, the main traction arm (3) can be lifted off completely by the lifting gear of the traction vehicle to be coupled up and, at the pivotal point (5), turned around by 180° with its longitudinal axis.

11. A soil cultivation machine according to claims 16, 17 and 19, **characterized in that,** following the turning of the main traction arm (3), the support arm (2) can be pivoted to and fixed in such a final position that the minimum of one working tool (1) readjusts to the correct angle position.

12. A soil cultivation machine according to claim 19, **characterized in that** the main traction arm (3) features a transverse slide to allow it to be adjusted to the track width of the traction vehicle to be coupled up.

13. A soil cultivation machine according to claim 19, **characterized in that,** in the course of working the soil, the working depth limitation of the minimum of one working tool (1) is achieved by a jack wheel (12) fitted to the main traction arm (3).

14. A soil cultivation machine according to claim 25, **characterized in that** the jack wheel (12) features, radial to the tread, around its whole circumference, a blade that serves to stabilize the lateral pull.

15. A soil cultivation machine according to claim 26, **characterized in that** the lateral pull stabilization can be set and adjusted at the stay of the jack wheel 12).

## Revendications

1. Dispositif de travail du sol pour le retournement de la terre selon le principe connu d'un tambour rotatif, la terre pouvant être décolletée, réceptionnée, transportée, retournée et déposée dans la direction opposée au sens de traction lors du retrait de l'outil de travail (1), au moyen d'au moins un outil de travail (1) conçu comme un tambour rotatif, pendant le travail du sol, **caractérisé en ce que** la rotation (10) de l'outil de travail (1) peut être produite simplement par le mouvement tracteur généré par le véhicule tracteur, et par la position d'attaque horizontale et la position d'attaque verticale de l'axe médian de l'outil de travail (1) par rapport au sens de traction, ainsi que par la conception spéciale de la bague d'usure (8) avec ses baguettes d'entraînement (9) ou autres, montée du côté de l'outil de travail (1) qui est tourné dans le sens de traction, et **en ce que** le retournement de la terre est produit grâce à la paroi interne de l'outil de travail (1), qui décrit une forme de vis en raison du mouvement de traction accompagné de la rotation (10) par rapport au sol, et la terre suit cette forme de vis en raison de la force de pression, jusqu'à ce qu'elle soit retournée de 180°, puis quitte la paroi interne contre le sens de traction et est déposée en raison de la pesanteur, l'outil de travail (1) s'introduisant tout seul dans la terre en raison de sa position d'attaque inclinée par rapport à l'horizontale, un dépôt décalé de la terre décolletée, réceptionnée, transportée et retournée étant atteint en raison de la position d'attaque verticale de l'outil de travail (1) par rapport au sens de traction, produisant ainsi un sillon de labour dégagé pour le travail du véhicule de traction pendant la prochaine étape de travail, le même outil de travail (1) étant utilisé pour le sens de traction opposé, nécessitant seulement une modification de sa position d'attaque et un inversement de son sens de rotation.

2. Dispositif de travail du sol selon la revendication 1, **caractérisé en ce que** l'appui de l'au moins un outil de travail est réalisé au moyen d'un palier centré à rouleaux coniques (9).

3. Dispositif de travail du sol selon la revendication 12, **caractérisé en ce que** la liaison entre le palier centré à rouleaux coniques (9) et l'au moins un outil de travail (1) est réalisée à l'aide d'au moins un rayon (7).

4. Dispositif de travail du sol selon la revendication 15, **caractérisé en ce que** pour chaque direction de travail, le longeron de maintien (2) est conçu de façon à pouvoir pivoter sur son axe longitudinal, et **en ce que** ses deux positions terminales peuvent être ajustées et fixées avec un dispositif, pour que la position d'attaque de l'axe médian de l'au moins un outil de travail (1) puisse être ajustée.

5. Dispositif de travail du sol selon la revendication 16, **caractérisé en ce que** le longeron de maintien (2) est conçu comme un parallélogramme (15) et comporte un dispositif de réglage (16) permettant de régler l'angle d'insertion latéral des outils de travail (1).

6. Dispositif de travail du sol selon la revendication 17, **caractérisé en ce que** lors du travail du sol avec réglage de l'angle d'insertion latéral, la traction latérale du dispositif de travail du sol et la vitesse de rotation de l'au moins un outil de travail (1) sont réglables.

7. Dispositif de travail du sol selon la revendication 16, **caractérisé en ce que** le longeron de maintien (2) est accroché à un longeron de traction principal (3).

8. Dispositif de travail du sol selon la revendication 19, **caractérisé en ce que** le longeron de traction principal (3) comporte un point de rotation (5) centré par rapport au véhicule tracteur destiné à être accouplé.

9. Dispositif de travail du sol selon la revendication 20, **caractérisé en ce que** le longeron de traction principal (3) peut être fixé au dispositif de levage du véhicule tracteur destiné à être accouplé.

10. Dispositif de traction du sol selon la revendication 21, **caractérisé en ce que** pendant le travail du sol, lors de l'inversement du sens de travail, le longeron de traction principal (3) peut être complètement levé par le dispositif de levage du véhicule tracteur destiné à être accouplé, et peut effectuer une rotation de 180° dans son axe longitudinal sur le point de rotation (5).

11. Dispositif de travail du sol selon les revendications 16, 17 et 19, **caractérisé en ce que** suite à la rotation du longeron de traction principal (3), le longeron de maintien (2) peut être pivoté et fixé dans la position terminale, de façon à ce que l'au moins un outil de travail (1) reprend la position d'attaque correspondante.

12. Dispositif de travail du sol selon la revendication 19, **caractérisé en ce que** le longeron de traction principal (3) comporte un dispositif de poussée transversale, afin de l'adapter à la largeur de voie du véhicule tracteur destiné à être accouplé.

13. Dispositif de travail du sol selon la revendication 19, **caractérisé en ce que** pendant le travail du sol, la limitation de profondeur de travail de l'au moins un outil de travail (1) est définie par une roue d'appui (12) fixée au longeron de traction principal (3).

14. Dispositif de travail du sol selon la revendication 25, **caractérisé en ce que** la roue d'appui (12) comporte une arête de coupe sur l'ensemble du pourtour radialement à la surface de roulement, qui sert à la stabilisation de traction latérale.

15. Dispositif de travail du sol selon la revendication 26, **caractérisé en ce que** la stabilisation de traction latérale peut être réglée et ajustée au niveau de l'appui de la roue d'appui (12).
